# EUROPÄISCHE PATENTANMELDUNG

(11) **EP 0 568 802 A1**
(43) Veröffentlichungstag der Anmeldung: **10.11.1993**
(21) Anmeldenummer: 93104734.4
(22) Anmeldetag: 23.03.1993
(51) Int. Cl.: F16B 13/14

(54) **Anker zur Verankerung mittels einer Verbundmasse**

(30) Priorität: 16.04.1992 DE 4212762
(71) Anmelder: fischerwerke Artur Fischer GmbH & Co. KG, D-72178 Waldachtal (DE)
(72) Erfinder: Arnold, Norbert, Dr., W-7244 Tumlingen 3/Waldachtal (DE)

(57) **Zusammenfassung**

Es wird ein Anker zur Verankerung mittels Verbundmasse in einem Bohrloch eines Betonteils oder dgl. vorgeschlagen, der einen Gewindebolzen (1) mit einem eine Anschlagschulter bildenden erweiterten Abschnitt (9) aufweist und von einer Hülse (2) umschlossen ist. Um eine Durchmessererweiterung der Hülse (2) bei einer Bohrlocherweiterung durch Rißbildung zu ermöglichen, weist die Hülse (2) von ihrem dem Bohrlochgrund zugewandten Ende ausgehend in Längsrichtung verlaufend wenigstens zwei als Sollbruchstelle ausgebildete Nähte (3) auf, die gegenüber dem Schaft des Gewindebolzens (1) abgedichtet sind. Durch die vorgeschlagene Lösung ergibt sich ein zugzonengeeigneter Anker für den Einsatz in ein zylindrisches Bohrloch, bei dem in gerissenem Beton keine Abminderung des Haltewertes eintritt.

## Beschreibung

Die Erfindung betrifft einen Anker zur Verankerung mittels einer Verbundmasse in einem Bohrloch eines Betonteils gemäß der Gattung des Anspruches 1.

Es ist bekannt, zur Verankerung einer Gewindestange mittels einer Verbundmasse ein Bohrloch auszubilden, welches im Bereich des Bohrlochgrundes eine Hinterschneidung aufweist. In der DE-A1 35 16 866 ist eine solche Verankerung beschrieben. Die Befestigung dieses bekannten Ankers erfolgt dadurch, daß in das Bohrloch eine Glasampulle eingeschoben wird, die eine Verbundmasse aus Polyesterharz, einem Härter und Zuschlagstoffen enthält. Beim Einsetzen des Ankers in das Bohrloch wird die Glasampulle zerstört und die Komponenten der Verbundmasse durch Vermengen aktiviert. Nach dem Aushärten der Verbundmasse ist der Anker fest im Bohrloch eingebunden und verankert. Die Verankerung beruht dabei im wesentlichen auf dem Klebeverbund zwischen Verbundmasse und Bohrlochwandung. Dieser Verbund wird jedoch dadurch erheblich gemindert, wenn durch die Verankerungsstelle ein Riß verläuft. Durch die Vergrößerung des Bohrloches infolge des Risses löst sich die Verbundmasse an der Bohrlochwandung ab, so daß im geraden Schaftteil des Ankers nur noch geringe Haltekräfte vorliegen. Der bekannte Anker besitzt jedoch eine konische Erweiterung im Bereich der Hinterschneidung des Bohrloches, so daß dort weiterhin größere Haltekräfte vorhanden sind. Diese hängen allerdings von der Ausbildung der Hinterschneidung und vom Anteil des hinterschnittenen Bereichs an der Gesamtlänge der Bohrung ab.

Die Erstellung eines hinterschnittenen Bohrloches erfordert Spezialwerkzeuge und in der Regel auch einen größeren Aufwand bei der Erstellung des Bohrloches. Aus diesem Grund wurden auch schon Versuche unternommen, durch besondere Ausgestaltungen des Verbundankers in zylindrischen Bohrlöchern die Rißempfindlichkeit zu reduzieren. So wurde beispielsweise vorgeschlagen, den Gewindebolzen des Ankers mit einem Konus zu versehen, der mittels einer Beschichtung eine Gleitfähigkeit gegenüber dem ausgehärteten Bindemittelkern aufweist. Damit soll erreicht werden, daß der Gewindebolzen im Bindemittelkern zum Ausgleich der Rißerweiterung nachrutscht. Ein derartiges Nachrutzchen ist allerdings nur erreichbar, wenn sich der gesamte Gewindebolzen gegenüber dem ausgehärteten Bindemittelkern ablöst. Dadurch tritt allerdings bereits eine erhebliche Reduzierung des Haltewertes ein. Ferner ist der Bindmittelkern wenig druckstabil, so daß schon bei relativ geringen Kräften ein Durchziehen des Gewindebolzens durch den Bindemittelkern eintritt. Bei derartigen Lösungen kommt als weiterer Nachteil hinzu, daß durch den am Gewindebolzen angeordneten Spreizkonus beim Verspannen des zu befestigenden Gegenstandes einerseits und der Gebrauchslast andererseits eine radiale Kraftkomponente entsteht, die im Bohrloch Spreizdruckkräfte erzeugt. Durch diese Spreizdruckkräfte ergibt sich eine Sprengwirkung, die größere Rand- und Achsabstände erforderlich macht.

Zur Vermeidung dieses Nachteils wurde in der DE-A1 36 20 972 eine mittels einer aushärtenden Masse verankerbare Ankerstange vorgeschlagen, die eine vom vorderen Ende ausgehende Zentralbohrung und Längsschlitze aufweist. Die Zentralbohrung und Längsschlitze sind durch ein aufgesetztes Füllstück abgedichtet. Durch diese Gestaltung der Ankerstange entsteht ein flexibler Bereich, der durch die Nachgiebigkeit der einzelnen Schenkel der Ankerstange ein Ablösen der Verbundmasse an der Mantelfläche der Ankerstange verhindern soll. Nachteilig bei diesem Vorschlag ist jedoch, daß durch die Querschnittsschwächungen der Ankerstange das die Gebrauchslast aufnehmende Teil des Befestigungssystems geschwächt wird. Ferner steht der Klebeverbund zwischen der Mantelfläche der Ankerstange und der Verbundmasse unter einer ständigen Spannung, die zumindest teilweise zu einer Ablösung führen kann. Dadurch ergibt sich ein hohes Risiko für ein Versagen der Verankerung.

Der Erfindung liegt die Aufgabe zugrunde, einen Anker zur Verankerung mittels einer Verbundmasse in einem zylindrischen Bohrloch eines Betonteils zu schaffen, der bei einer Verankerung in der Zugzone und den dabei auftretenden Bohrlocherweiterungen durch Rißbildung hohe Sicherheitsreserven besitzt und Haltewertverluste vermeidet.

Die Lösung dieser Aufgabe wird durch die im Anspruch 1 angegebenen Merkmale erreicht. Der Anker besteht aus einem Gewindebolzen, der an seinem dem Bohrloch zugewandten Ende einen eine Anschlagschulter bildenden erweiterten Abschnitt aufweist. Auf der Anschlagschulter sitzt eine Hülse auf, die in Längsrichtung mit mehreren als Sollbruchstelle ausgebildeten Nähten versehen ist. Die Nähte sind gegenüber dem Schaft des Gewindebolzens abgedichtet. Zur Verankerung wird der Anker in ein Bohrloch eingetrieben, in der sich eine mit den Komponenten der Verbundmasse gefüllte Glasampulle oder anderweitig eingebrachte Verbundmasse befindet. Als Verbundmasse können alle gängigen Harte, insbesondere Epoxidharze und Polyesterharze, verwendet werden. Das Einbringen des Ankers erfolgt über eine Bohrmaschine im Drehgang, mit der durch Drehen des Gewindebolzens mit der aufgesteckten Hülse und gleichzeitiger Vorschubbewegung die Glasampulle zerstört und die Komponenten der Verbundmasse vermischt werden.

Nach dem Aushärten der Verbundmasse ist die Hülse und damit der mit seinem erweiterten Abschnitt an der vorderen Stirnseite der Hülse anstoßende Gewindebolzen fest im Bohrloch verankert. Beim Auftreten eines Risses reißen die als Sollbruchstelle ausgebildeten Nähte der Hülse auf, so daß die Hülse in einzelne Längssegmente zerlegt wird. Damit wird eine Durchmesservergrößerung der Hülse ermöglicht, die die Bohrlocherweiterung durch Rißbildung ausgleicht. Ein Haltewertverlust tritt dabei nicht ein, da der erweiterte Abschnitt mit seiner Anschlagschulter sich weiterhin an der Stirnseite der fest in der Verbundmasse eingebetteten Hülse abstützt. Durch den erweiterten Abschnitt des Gewindebolzens werden auf die Hülse nur in Achsrichtung der Bohrung Kräfte übertragen. Es entstehen somit reine Schubspannungen an der Bohrlochwandung, die keine Spreizwirkung erzeugen. Damit kann der Anker mit geringen Rand- und Achsabständen eingesetzt werden.

Die Nähte der Hülse können mindestens über den größten Teil, vorzugsweise über die gesamte Länge der Hülse verlaufende Nuten sein, deren Nutgrund durch reduzierte Wandstärke aufreißbar ist. Eine andere Lösung sieht vor, daß die Nähte als Schlitze ausgebildet sind, in denen zur Abdichtung des Gewindebolzens Kunststoffleisten eingeSetzt und verklebt sind. Die Verklebeflächen der Kunststoffleisten bilden dabei die Sollbruchstelle, an der die Hülse aufreißt.

Zweckmäßigerweise können die Kunststoffleisten an einer Kunststoffhülse angesetzt sein, die den rückwärtigen Teil der Hülse bildet. Die Abstützung des erweiterten Abschnittes des Gewindebolzens erfolgt am vorderen Teil der Hülse, der aus Stahl besteht und im Bereich der Kunststoffleisten aufreißbar ist.

Die Bildung der als Sollbruchstelle wirkenden Nähte der Hülse kann auch dadurch erreicht werden, daß die Hülse aus Halb- bzw. Viertelschalen zusammengeklebt ist.

Die Abdichtung des Gewindebolzens gegen eindringende Verbundmasse kann noch dadurch verbessert werden, daß auf der Anschlagschulter des erweiterten Abschnittes des Gewindebolzens ein Dichtring aufgesetzt ist. Unabhängig davon kann es noch zweckmäßig sein, den Schaft des Bolzens mit einer Beschichtung zu versehen, um einen Klebeverbund zwischen Hülse und Bolzen bei unter Umständen doch eindringender Verbundmasse zu verhindern.

Zur Verbesserung der Verklebung und Einbindung der Hülse in die Verbundmasse kann dessen Mantelfläche durch umlaufende Kerben, Gewinde oder dgl. strukturiert sein.

Beim Eintreiben des Ankers in das Bohrloch ist es zweckmäßig, die Hülse durch geeignete Maßnahmen auf dem Schaft des Gewindebolzens zu sichern. Dies kann beispielsweise durch Einprägungen, Sicken, Schweißpunkt, Sprengring oder dgl. erfolgen.

In der Zeichnung sind Ausführungsbeispiele der Erfindung dargestellt.

Es zeigen:
- Figur 1: einen Anker teilweise im Längsschnitt,
- Figur 2: einen Querschnitt des Ankers gemäß der Schnittlinie I-I,
- Figur 3: einen weiteren Querschnitt des Ankers gemäß der Schnittlinie II-II,
- Figur 4: eine weitere Ausführungsform der Hülse des Ankers,
- Figur 5: die Hülse, bestehend aus einem Kunststoff- und Stahlteil und
- Figur 6: eine aus Viertelschalen gebildete Hülse.

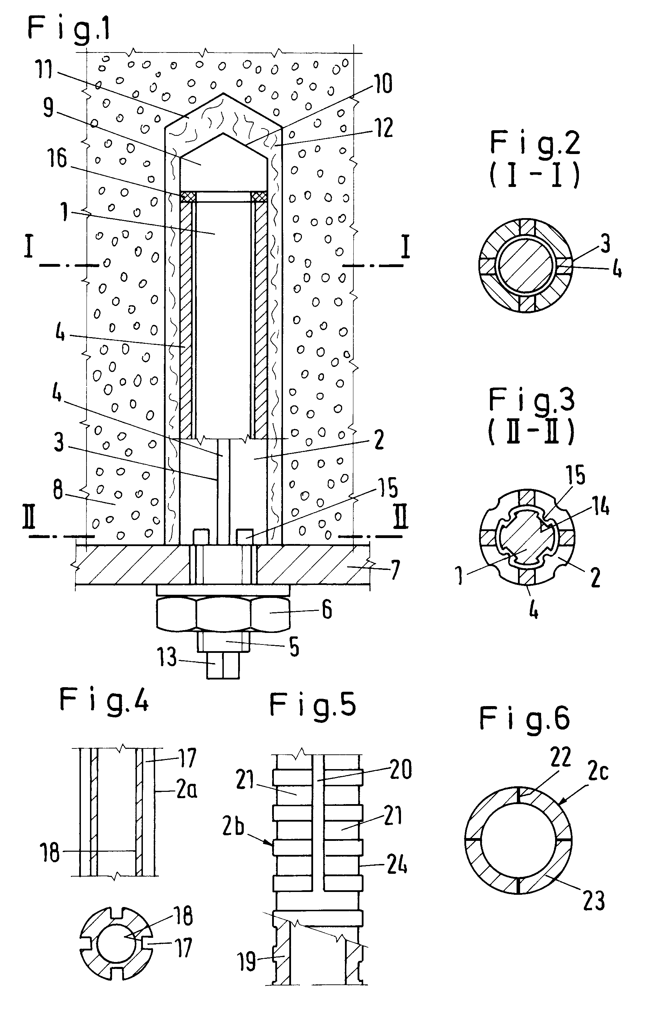

Der in Figur 1 dargestellte Anker besteht aus einem Gewindebolzen 1 und einer Hülse 2, die gemäß den beiden dargestellten Querschnitten in Figur 2 und 3 vier als Sollbruchstellen ausgebildete Nähte 3 aufweist. Die Nähte sind durch längsverlaufende Schlitze gebildet, in denen Kunststoffleisten 4 eingesetzt und verklebt sind. Der Gewindebolzen 1 besitzt einen Gewindeabschnitt 5, auf dem eine Mutter 6 zur Befestigung eines Gegenstandes 7 an einem Bauteil 8 aufgeschraubt ist. An seinem dem Bohrlochgrund zugewandten Ende weist der Gewindebolzen 1 einen erweiterten Abschnitt 9 auf, dessen Stirnseite mit einer Dachschräge 10 versehen ist. Die Dachschräge 10 dient zur Zertrümmerung einer zuvor in das Bohrloch 11 eingesetzten Glasampulle mit Verbundmasse, beispielsweise einem Epoxid- oder Polyesterharz mit Zuschlagstoffen. Um eine innige Vermischung der Verbundmasse 12 zu erreichen, wird der Gewindebolzen 1 mit einer Bohrmaschine und dem dafür vorgesehenen Mehrkant 13 an dem der Dachschräge gegenüberliegenden Ende des Gewindebolzens in das Bohrloch 11 eingetrieben.

Die Mitnahme der Hülse 2 beim Drehen des Gewindebolzens 1 erfolgt über am Gewindebolzen angeordneten Einkerbungen 14, in die sickenartige Einprägungen 15 der Hülse 2 eingreifen (siehe Figur 3). Durch diese Einprägungen 15 wird gleichzeitig auch eine axiale Fixierung der Hülse 2 auf dem Gewindebolzen 1 erreicht. Die Sicherung der Hülse auf dem Gewindebolzen kann jedoch auch durch einen Schweißpunkt, Klebepunkt oder dgl. erfolgen.

Nach dem Aushärten der Verbundmasse 12 ist die Hülse 2 fest in der Verbundmasse eingebunden. Da der erweiterte Abschnitt 9 des Gewindebolzens 1 an der Stirnseite der eingebettenen Hülse anstößt, ergibt sich die Verankerung des Gewindebolzens 1 im Bohrloch. Um zu verhindern, daß während des Eintreibvorganges Verbundmasse in den Innenraum der Hülse dringt, ist auf der Anschlagschulter des erweiterten Abschnittes 9 des Gewindebolzens 1 ein Dichtring 16 angeordnet. Beim Auftreten eines Risses und der dadurch bedingten Bohrlocherweiterung reißen die Nähte 3 der Hülse 2 auf und ermöglichen eine der Bohrlocherweiterung entsprechende Durchmesservergrößerung der Hülse 2. Da durch diese Durchmessererweiterung die Abstützung des erweiterten Abschnittes 9 nicht beeinträchtigt wird, bleibt der Haltewert des Ankers auch in einem gerissenen Betonteil ohne Minderung erhalten. Bei der in Figur 4 dargestellten Hülse 2a ergeben sich die Sollbruchstellen durch Längsnuten 17, wobei durch die reduzierte Wandstärke des Nutgrundes 18 ein Aufreißen der Hülse 2a ermöglicht wird.

Bei dem in Figur 5 dargestellten Ausführungsbeispiel der Hülse 2b besteht der hintere Teil aus einer Kunststoffhülse 19, an der zwei oder vier Kunststoffleisten 20 angesetzt sind. Die Leisten 20 bilden die Naht und Sollbruchstelle für den vorderen Teil der Hülse 2b, die aus Metallschalen 21 besteht. Durch Vekleben der Schalen 21 mit den Kunststoffleisten 20 ergibt sich die geschlossene Hülse 2b.

In Figur 6 ist eine Ausführungsform der Hülse 2c dargestellt, die durch Verkleben an den Nahtstellen 22 aus vier Viertelschalen 23 gebildet ist. Die Mantelfläche der Hülsen 2, 2a, 2b, 2c können - wie in Figur 5 dargestellt - mit umlaufenden Kerben 24, einem Gewinde oder in anderer Form strukturiert sein.

## Patentansprüche

1. Anker zur Verankerung mittels einer Verbundmasse in einem Bohrloch eines Betonteils oder dgl. mit einem Gewindebolzen, der an seinem dem Bohrlochgrund zugewandten Ende einen eine Anschlagschulter bildenden erweiterten Abschnitt aufweist und von einer Hülse umschlossen ist, **dadurch gekennzeichnet,** daß die Hülse (2, 2a, 2b, 2c) von ihrem dem Bohrlochgrund zugewandten Ende ausgehend wenigstens Zwei in Längsrichtung verlaufende, als Sollbruchstelle ausgebildete Nähte (3, 17, 22) aufweist, die gegenüber dem Schaft des Gewindebolzens (1) abgedichtet sind.

2. Anker nach Anspruch 1, **dadurch gekennzeichnet,** daß die Nähte mindestens über den größten Teil der Gesamtlänge der Hülse verlaufende Nuten (17) sind, deren Nutgrund (18) durch reduzierte Wandstärke aufreißbar ist.

3. Anker nach Anspruch 1, **dadurch gekennzeichnet,** daß die Nähte mindestens über den größten Teil der Gesamtlänge der Hülse verlaufende Schlitze sind, in denen Kunststoffleisten (4) eingesetzt und verklebt sind.

4. Anker nach Anspruch 3, **dadurch gekennzeichnet,** daß die Kunststoffleisten (20) an einer Kunststoffhülse (19) angesetzt sind, die den rückwärtigen Teil der Hülse (2b) bildet.

5. Anker nach Anspruch 1, **dadurch gekennzeichnet,** daß die Nähte (22) durch Zusammenkleben von Halb- bzw. Viertelschalen (23) einer Hülse gebildet sind.

6. Anker nach Anspruch 1, **dadurch gekennzeichnet,** daß auf der Anschlagschulter des erweiterten Abschnittes (9) des Gewindebolzens (1) ein Dichtring (16) aufgesetzt ist.

7. Anker nach Anspruch 1, **dadurch gekennzeichnet,** daß die Stirnseite des erweiterten Abschnittes (9) mit einer Dachschräge (10) versehen ist.

8. Anker nach Anspruch 1, **dadurch gekennzeichnet,** daß die Mantelfläche der Hülse durch umlaufende Kerben (24), Gewinde oder dgl. strukturiert ist.

9. Anker nach Anspruch 1, **dadurch gekennzeichnet,** daß der Schaft des Gewindebolzens (1) mit einer Beschichtung versehen ist.

10. Anker nach Anspruch 1, **dadurch gekennzeichnet,** daß die Hülse (2, 2a, 2b, 2c) auf dem Schaft des Gewindebolzens (1) durch sickenartige Einprägungen (15) gesichert ist, die in entsprechende Einkerbungen (14) des Gewindebolzens eingreifen.
